# EUROPEAN PATENT SPECIFICATION

(11) **EP 0 633 280 B1**
(45) Date of publication and mention of the grant of the patent: **06.09.2000**
(21) Application number: 94401536.1
(22) Date of filing: 05.07.1994
(51) Int. Cl.: C08G 65/32, C06B 45/10, C07D 249/04

(54) **Azide polymers derivatized with dipolarophiles**
Mit Dipolarophilen derivasierte Azidopolymere
Azidopolymères dérivés avec dipolarophiles

(30) Priority: 07.07.1993 US 88446; 21.01.1994 US 184693
(43) Date of publication of application: 11.01.1995
(73) Proprietor: MINNESOTA MINING AND MANUFACTURING COMPANY, St. Paul, Minnesota 55133-3427 (US)
(72) Inventor: Wolk, Martin B., c/o Minnesota Mining & Man. Co.,, St. Paul, Minnesota 55133-3427 (US); Dower, William V., c/o Minnesota Mining & Man. Co., St. Paul, Minnesota 55133-3427 (US)
(74) Representative: Warcoin, Jacques

(56) References cited:
- EP-A- 0 380 305
- US-A- 3 251 852
- J. POLYMER SCIENCE:POLYMER CHEM. ED., vol.19, 1981 pages 3269 - 3284 COHEN H.L. 'The prep. and reactions of polymeric azides'
- POLYMER LETTS., vol.8, 1970 pages 829 - 833 TAKEISHI M. ET AL 'Reaction of pvc containing azide groups'

## Description

### FIELD OF INVENTION

This invention relates to derivatized azide-containing polymers and in particular, it relates to azide-containing polymers which have been derivatized with certain dipolarophiles. This invention also relates to aqueous-based coatings of azide-containing polymers which have been derivatized with dipolarophiles containing water-solubilizing groups. This invention further relates to an article coated with azide-containing polymers derivatized with dipolarophiles. Additionally, the invention relates to a process for coating a substrate with an azide-containing polymer derivatized with dipolarophiles.

### BACKGROUND OF THE ART

Azide-containing compounds and polymers ("azides") are important in the fields of explosives and propellants because the azide (N₃) group is highly energetic and can be easily incorporated into a polymer or oligomer at high weight percentage loadings. A useful class of azide materials is the oligomers or polymers derived from azide-containing cyclic ether monomers, e.g., glycidyl azide polymer ("GAP") and bis(azidomethyl)oxetane polymer ("polyBAMO"). Generally, the product of polymerization is a low molecular weight polymer or oligomer (e.g., 2,000 -10,000 MW). Alternatively, it can be a higher molecular weight polymer (e.g., 10,000 - 100,000 MW). See, for example, U.S. Pat. Nos. 3,694,383; 3,645,917; 4,483,978; and 4,879,419.

When used in propellant applications, it is important that the azide-containing polymers have excellent stability under processing conditions and that the final compounded materials have good stability during storage at elevated temperatures. The desired stability is generally obtained by taking precautions to ensure that during the preparation of the azide-containing polymer, the chloride functionality in the precursor is quantitatively converted to azide, and residual by-products or catalysts are removed. It is believed that residual chloride in the azide-containing polymer can lead to the generation of HCl and result in lowered stability and corrosion problems. It is also desirable to maximize the azide content of the polymer through quantitative conversion of the chloride functionality in the polymer to azide. To these ends, much work has been carried out on processes to quantitatively and efficiently convert the chloride functionality in the precursor to azide. See, for example, U.S. Pat. Nos. 4,379,894; 4,486,351; 4,937,361; and 5,055,600.

Azide substitution of up to 60 mole % of the chlorine atoms of a poly(vinyl chloride) without gel formation has been reported. One of these thus formed vinyl chloride/vinyl azide copolymers has been reported to react with phenylacetylene to give a triazole. See M. Takeishi et al., *Polymer Letters*, **7**, 201-203, (1969) and M. Takeishi et al., *Polymer Letters*, **8**, 829-833 (1970) .

Reaction of glycidyl azide polymer and 2,2-bis(azidomethyl)oxetane polymer with large stoichiometric excesses of substituted alkyne functional dipolarophiles has been reported. Significant polymer degradation was observed in the latter case. No azide-containing polymers were isolated as products. See H. L. Cohen, *J. Polymer Science: Polymer Chem. Ed.*, **19**, 3269-3284 (1981).

The above-disclosed azide-containing materials are usually incorporated into goods by casting and curing in place or by solvent casting. Often, though, it has been found that such materials do not have the optimal desired physical properties for the intended application. Among the important characteristics or properties are tack, fluidity, solubility, elasticity, and the like. Examples of the modification of such properties of azide-containing materials include chain extension and crosslinking (often accomplished with isocyanates as disclosed in U.S. Pat. Nos. 4,268,450; 4,483,978; and 4,962,213) and block copolymerization with other monomers (as disclosed in US patent n° 4,483,978).

Azide-containing polymers possessing improved physical properties are continuously sought after and desired by industry, however. It was against this background that such improved azide-containing polymers were sought.

### SUMMARY OF THE INVENTION

In accordance with the present invention, it has been discovered that azide-containing polymers with excellent physical properties can be produced by derivatizing some of the azide groups of the polymers with certain dipolarophiles.

Thus, in one embodiment of the present invention there are provided novel polymers comprising triazole and/or triazoline groups and at least 15 weight percent unreacted azide groups, obtainable from the reaction between :
(a) azide groups of a polymer which contains at least 30 weight percent azide groups and less than 2 weight percent halogen, and ;
(b) at least one dipolarophile having a reactive group selected from olefins and alkynes which are substituted with electron withdrawing groups.

The azide groups may be terminal in addition to being pendant to the polymer.

In another embodiment, the present invention provides solutions that can be coated to give transparent films of the above-disclosed, novel azide-containing polymers that have been derivatized with certain dipolarophiles.

In still another embodiment, the present invention provides aqueous-based coatings comprising an aqueous solution of the above-disclosed, novel azide-containing polymers. Such polymers have been derivatized with certain dipolarophiles substituted with water-solubilizing (e.g., carboxylate) groups.

In still another embodiment, the present invention provides articles comprising a substrate (e.g., glass, metal, or plastic) coated with the foregoing-disclosed, inventive derivatized azide-containing polymers.

The invention is also directed to an article comprising a substrate coated with a transparent film of the polymer of the invention.

In yet another embodiment, the present invention provides a process comprising coating a substrate with the above-disclosed, inventive derivatized azide-containing polymers.

As used herein:
"azide" refers to N₃;
"group" refers to not only pure hydrocarbon chains or structures such as methyl, ethyl, cyclohexyl, and the like, but also to chains or structures bearing conventional substituents in the art such as hydroxyl, alkoxy, phenyl, cyano, nitro, amino; and
"radical" refers to the inclusion of only pure hydrocarbon chains such as methyl, ethyl, propyl, cyclohexyl, isooctyl, *tert*-butyl, and the like.

Other aspects, advantages, and benefits of the present invention are apparent from the detailed description, the examples, and the claims.

### DETAILED DESCRIPTION OF THE INVENTION

In one preferred embodiment, the azide-containing polymer used as one of the reactants has the following formula: 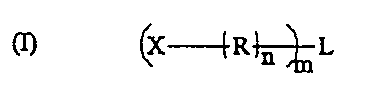 wherein:
X represents a hydroxyl, aide, mercapto, or amino (including mono-alkyl and aryl-substituted amino) group and preferably, X is an aide or a hydroxyl group.
R represents a divalent monomer group, containing a N₃ group, derived from a cyclic ether such as, for example, -CH₂CH(CH₂N₃)O-, -CH₂C(CH₃)(CH₂N₃)CH₂O-, -CH(CH₂N₃)CH₂O-, -CH₂C(CH₂N₃)₂CH₂O-, -CH(CH₂N₃)CH(CH₂N₃)O-, and -CH₂CH(N₃)CH₂O-; a cyclic sulfide such as, for example, -CH₂CH(CH₂N₃)S-, -CH₂C(CH₂N₃)₂CH₂S-, -CH(CH₂N₃)CH(CH₂N₃)S-, and -CH₂CH(N₃)CH₂S-; and a cyclic amine such as, for example, -CH₂CH(CH₂N₃)NR¹-, -CH(CH₂N₃)CH₂NR¹-, -CH₂C(CH₂N₃)₂CH₂NR¹ -, -CH(CH₂N₃)CH(CH₂N₃)NR¹-, and -CH₂CH(N₃)CH₂NR¹-;
R¹ represents a hydrocarbyl group (e.g., alkyl, aryl, aralkyl, alkaryl,);
L represents a mono-, di-, tri- or tetra-valent alkyl radical. Non-limiting examples of monovalent radicals are methyl and ethyl. Non-limiting examples of polyvalent alkyl radicals are ethylene, methylene, propylene, 1,2,3-propanetriyl, 2-ethyl-2-methylene-1,3-propanediyl, 2,2-dimethylene-1,3-propanediyl. Preferably, L is 2-ethyl-2-methylene-1,3-propanediyl;
corresponding to L, m represents 1, 2, 3, or 4; and
n represents any positive integer greater than 1, preferably greater than 5, more preferably greater than 10.

The foregoing azide-containing polymer of Formula (I) can be made by procedures well known to those skilled in the art of synthetic organic chemistry such as disclosed, for example, in U.S. Pat. Nos. 3,645,917 and 4,879,419.

The foregoing azide-containing polymer of Formula (I) has a low halogen content to ensure that the polymer has the desired stability properties. The low halogen content is generally accomplished by choosing reaction conditions and catalysts to ensure the quantitative conversion to azide of the halogen functionality in the polymer precursor. The term "low halogen content" means that the polymer has less than 2 weight percent halogen; more preferably, the polymer has less than 1 weight percent halogen; and most preferably, less than 0.5 weight percent halogen, based upon the total weight of the polymer. The term halogen refers to chlorine, bromine, or iodine covalently bound to a carbon atom of the polymer.

One or more crosslinking agents may be employed in combination with the azide-containing polymer of Formula I to provide coatings having improved strength. The choice of an appropriate crosslinking agent depends on the functional groups on the azide-containing polymer. Thus, if hydroxyl groups are present on the azide-containing polymer, then crosslinking agents for polyols could be employed (e.g., isocyanates). In cases where free-radically polymerizable groups, such as acrylates, are attached to the polymer backbone, a free-radical initiator may be used as a crosslinking agent.

Preferably, a crosslinking agent for polyols is employed in combination with an azide-containing polymer having multiple hydroxyl end groups. Preferred crosslinking agents in this case are polyisocyanates, including but not limited to, hexamethylene diisocyanate; diphenylmethane diisocyanate; bis(4-isocyanatocyclohexyl)methane, 2,4-toluene diisocyanate.

In another preferred embodiment, the azide-containing polymer used as one of the reactants has recurring units of the following formula: 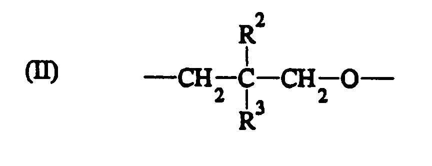 wherein:
either R² or R³ or both each independently represent an N₃-containing group. An example of a preferred azide group is -CH₂N₃.

The azide-containing polymer of Formula (II) can be made by procedures well known to those skilled in the art of synthetic organic chemistry such as disclosed, for example, in U.S. Pat. No. 3,694,383.

In another preferred embodiment, energetic copolymers are utilized as reactants having repeating units derived from different monomers, one or more of which have N₃ groups. Preferably the monomers are cyclic oxides having three to six ring atoms. Copolymerization of the monomers is preferably carried out by cationic polymerization. The foregoing copolymers and their method of preparation are disclosed in U.S. Pat. No. 4,483,978.

As disclosed earlier herein, dipolarophiles are the other coreactant used to make the novel polymer of the present invention. Depending upon the initial loading of the azide content of the starting polymer, some of the azide groups of the polymer will undergo a derivatization reaction with dipolarophiles which have reactive groups or centers selected from olefins and alkynes. The reactive groups of the dipolarophile are substituted with electron withdrawing groups as is known in the art. As a result of the reaction of the dipolarophile with some of the azide groups of the polymer, triazole or triazoline groups are formed depending upon the dipolarophile and considerations of regiospecificity.

The reaction between an azide group of a polymer and an olefin or alkyne reactive group of a dipolarophile may be illustrated by the following synthetic schemes:

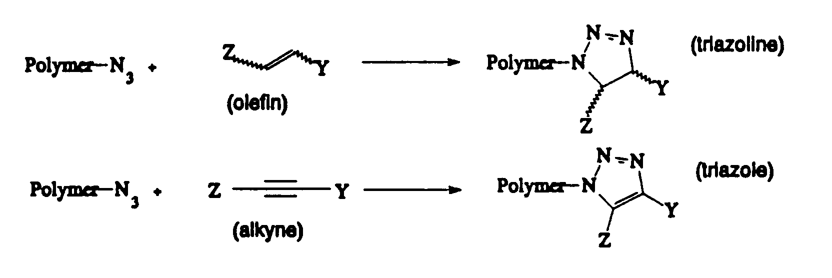

Y and Z may be independently represented by the following non-inclusive list: R⁴, CO₂R⁴, COR⁴, NO₂, CF(NO₂)₂, CN, SOR⁴, SO₂R⁴, SO₃R⁴, where R⁴ is H, halogen, alkyl, aryl, substituted-alkyl, substituted-aryl, perfluoralkyl, or substituted-perfluoroalkyl.

Generally, the foregoing reactions occur under extremely mild conditions in a "one-pot" reaction. A solution of the azide-containing polymer and the dipolarophile in an appropriate solvent (such as MEK) is heated in a closed container at about 60°C for about 1-24 hours. Enough of the dipolarophile is added to react with a portion of the azide groups in the polymer, resulting in an energetic polymer containing at least 15 weight percent unreacted azide groups. The amount of dipolarophile to be added can usually be determined by ordinary stoichiometric calculations. Preferably less than about 0.5 equivalents of the dipolarophile based on the azide content of the polymer is added. More preferably less than 0.3 equivalents and most preferably less than 0.2 equivalents of the dipolarophile based on the azide content of the polymer is added. The reaction occurs during heating and the resulting solution can be used directly for coating after it has been cooled to room temperature or the material can be concentrated and the solvent changed to another which is more preferable.

When solutions of azide-containing polymers, such as poly[bis(azidomethyl)oxetane], are coated, they do not generally result in good films. Haziness, surface cracking, and fisheyes are deficiencies that are commonly observed when coating these polymers. Surprisingly, many of the polymers of this invention which have been reacted with dipolarophiles exhibit good coating properties and result in transparent films with good physical integrity.

If water solubility of the resulting polymer product is desired, then the reactive groups of the dipolarophile should be substituted with water-solubilizing groups such as carboxylates or groups which are easily transformed into water solubilizing groups.

Water solubility of the azide-containing polymeric reaction product is desirable for several reasons. First, aqueous coating solutions are highly preferred in the manufacture of films because of environmental, safety, and handling considerations. For example, aqueous coating solutions of the reaction product can be safely shipped long distances without the traditional concerns of shipping explosive materials. Second, an increase in the number of certain substituents, such a ammonium carboxylates, on the azide-containing polymer can improve the polymer's thermal properties. Third, the polymers can be used in combination with materials which can only be dissolved in aqueous media (e.g., catalysts, oxidizers, fuels, sensitizers).

The following synthetic scheme is illustrative of one method by which an initially azide-containing polymer can be rendered water-soluble through derivatization of the reactive groups of a dipolarophile:

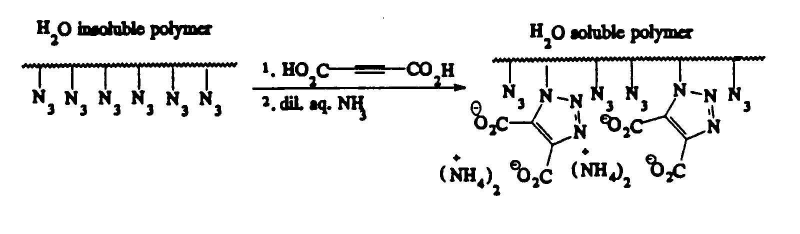

The foregoing method also allows various groups with desired properties to be covalently bonded to an azide-containing chain in whatever loading will be required to obtain the desired final properties. The process can be performed after the completion of polymerization and the determination of loading requirements. Possible candidates for the molecules to be grafted are stabilizers, catalysts, sensitizers, initiators, dyes, or electrically charged groups which can serve to mordant the above types of materials.

In contrast, if two or more dipolarophile moieties are incorporated into a single molecule, this allows an efficient means to crosslink or chain extend azide-containing polymers (see U.S. Pat. No. 3,645,917). Again, the loading can be adjusted to obtain the correct final properties to adjust for the possibility of variation in the original material. The advantage of the foregoing approach is apparent when compared to the methods discussed below.

Other approaches to modification of the physical properties of azide-containing polymers are known in the literature. In particular, the use of plasticizers to obtain highly elastomeric materials is taught in U.S. Pat. Nos. 4,781,861 and 5,124,463. However, the additive may diffuse from the polymer with this approach since it is not covalently linked to the main chain. Useful plasticizers for high energy polymers are often high energy materials themselves. Energetic polymers plasticized in this way can be problematic, given the long shelf life required in some applications and the hazards which some of these plasticizers present if they leach out. A second approach is taught in U.S. Pat. No. 4,483,978. Here, the T_{g} of the final material is controlled by the use of a mixture of monomers. This approach complicates the polymer synthesis and involves additional synthetic steps which add cost and material handling risks.

Chain extension or crosslinking is particularly important for materials which are liquid in their native state. A typical approach in these cases is to react di- or poly-isocyanates with the terminal hydroxyl groups commonly found in these polyethers. This approach dictates that the polyether should have chains which are all terminated by the same type of (preferably primary) hydroxyl groups. It also involves the use of multifunctional isocyanates which tend to be highly toxic and potentially skin sensitizing. The risks of handling these isocyanates can be reduced by the choice of (1) less reactive or (2) less volatile, higher molecular weight materials. These choices may not be attractive due to the increase in cure time and temperature for (1), and dilution of the high energy material by the increased mass of the isocyanate derivative for (2). Further, for any use of isocyanates, the reactive polymer will be diluted by the inclusion of relatively low energy urethane linkages. These further lower the energy of the system. Thus, this type of approach is to be avoided.

Novel articles can be provided by coating an appropriate substrate (e.g., metal, glass, plastic, polymeric) with a solution of the modified azide-containing polymer disclosed earlier herein. Any conventional method such as slot, extrusion, or roll coating can be utilized.

The following non-limiting examples further illustrate the present invention.

### EXAMPLES

### Example 1

Poly[bis(azidomethyl)oxetane] ("polyBAMO") was obtained from Aerojet Corporation and was analyzed as 35.7 % C, 4.8 % H, 48.3 % N, and 0.15 % Cl with MW ∼ 4500. A solution of "polyBAMO" (110 mg) and diethyl acetylenedicarboxylate (11 mg, Aldrich Chemical Co.) in ∼2.1 ml CHCl₃ was heated at 60°C in a closed vial for 1.5 hr. The resulting polymer solution was coated onto plain 50.8 µm (2 mil) poly(ethylene terephthalate)(PET) with a #6 Mayer rod and dried at 60°C for about 3 min. until the solvent had evaporated. The coating exhibited a marked increase in transparency in comparison to underivatized polyBAMO coatings. ¹³C-NMR analysis of the polymer indicated the presence of triazoles (carbon shifts of 131 and 140 ppm) along with a loss of the carboxylate carbon symmetry of diethyl acetylenedicarboxylate, both observations being consistent with the predicted reaction course.

### Example 2

Acetylenedicarboxylic acid ("AD", 250 mg, Aldrich Chemical) was added to 5 g polyBAMO in 45 g methyl ethyl ketone (MEK) and the resulting solution heated in a closed jar at 60°C for ∼3.5 h. The AD/polyBAMO MEK solution was shown to have excellent film-forming properties.

### Example 3

Maleic acid (200 mg, Aldrich Chemical) was added to 1.8 g polyBAMO in 18 g MEK and the resulting solution heated in a closed jar at 60°C for 16.5 hr. The maleic acid/polyBAMO MEK solution was shown to have excellent film-formihg properties.

### Example 4

5 g of polyBAMO in 45 g of MEK were warmed briefly in a 60°C oven until the polyBAMO completely dissolved. 1 g of AD was added to the warm solution and the reaction mixture was heated in a closed jar at 60°C for 20 hrs. The cooled, slightly yellow solution was evaporated to give a viscous yellow oil which readily formed a 25 weight percent solution in 3 weight percent aqueous ammonia. A coating of the solution was made on plain 4 0.102 mm (mil) PET and the resulting film was very resilient, transparent, and colorless.

AD/GAP (glycidyl azide polymer) was prepared the same way using 5 g of GAP-triol (triol-terminated GAP polymer made according to the procedure disclosed in U.S. Pat. No. 4,962,213; MW ∼ 3,500; polydispersity index of less than 2.5) solution (21 weight percent in MEK), 5 g of MEK, and 200 mg of AD. A coating of the solution was made on plain 4 0.102 mm (mil) PET and the resulting film was much less tacky than underivatized GAP.

### Example 5

Polymer blends of underivatized GAP-triol and polyBAMO were prepared by mixing GAP-triol (21 weight percent in MEK) and polyBAMO (10 weight percent in MEK) to give GAP/polyBAMO weight ratios of 1:1, 1:5, and 1:10. The solutions were used to coat plain 4 0.102 mm (mil) PET and the resulting films comparative had a foggy, granular appearance.

Polymer blends of AD/GAP and AD/BAMO were prepared by mixing the aqueous solutions described in Example 3 in proportions of 1:1, 2:1, and 1:2. The solutions were used to coat plain 4 0.102 mm (mil) PET and the resulting films were uniform and transparent.

### Example 6

1 g of the aqueous AD/polyBAMO solution from Example 3 was doped with 17 mg of NH₄NO₃. The doped solution was used to form a colorless, transparent film which is an example of a homogeneous azide polymer-oxidizer mixture.

### Example 7

A mixture of 200 g GAP-triol (equivalent wt. 1800; 0.11 Mol OH) and 27.4 g isophorone diisocyanate ("IPDI", equivalent wt. 112; 0.245 mol NCO) in 1000 g dry MEK with 20 mg dibutyltin dilaurate was heated at reflux for 4 hrs. The resulting solution of IPDI-capped GAP (0.134 mol NCO) was added to a solution of 5.35 g ethylenediamine (0.178 mol NH₂) in 270 ml dry MEK. To 5 g of this "ENGAP" solution was added 20 mg of benzoquinone. The solution with the benzoquinone was gelled 24 hrs. later, whereas the ENGAP without the benzoquinone had not gelled 6 months later.

### Example 8

A 2.9 g sample of a GAP-triol solution (20% in MEK) was added to 20 mg of octadiyne and heated to 60°C. The resulting solution formed a gel after seven days.

### Example 9

The decomposition temperatures of acetylenedicarboxylic acid-modified polyBAMO (polyBAMO/AD) was estimated by heating small samples (∼10 mg) on a temperature controlled hotplate. The polymer cast from MEK decomposed at 303°C while the same polymer cast from aqueous ammonia decomposed at 243°C.

## Claims

1. A polymer comprising triazole and/or triazoline groups and at least 15 weight percent unreacted azide groups, obtainable from the reaction between :
(a) azide groups of a polymer which contains at least 30 weight percent azide groups and less than 2 weight percent halogen, and ;
(b) at least one dipolarophile having a reactive group selected from olefins and alkynes which are substituted with electron withdrawing groups.

2. The polymer according to Claim 1, wherein the polymer in (a) contains less that 1 weight percent halogen.

3. The polymer according to Claim 1, wherein the polymer in (a) contains less than 0.5 weight percent halogen.

4. The polymer according to Claims 1 to 3 wherein said reactive group in said dipolarophile is an olefin.

5. The polymer according to Claims 1 to 3, wherein said reactive group in said dipolarophile is an alkyne.

6. The polymer according to Claims 1 to 5, wherein water-solubilizing groups are attached to said reactive groups of said dipolarophiles.

7. An aqueous-based coating comprising an aqueous solution of the polymer of Claims 1 to 6.

8. An article comprising a substrate coated with the polymer of Claims 1 to 6.

9. A process comprising coating a substrate with the polymer of Claims 1 to 6.

10. An article comprising a substrate coated with a transparent film of the polymer of Claims 1 to 6.

## Patentansprüche

1. Polymer, umfassend Triazol- und/oder Triazolingruppen und wenigstens 15 Gew.-% nichtumgesetzte Azidgruppen, das aus der Umsetzung zwischen:
(a) Azidgruppen eines Polymers, welches wenigstens 30 Gew.-% Azidgruppen und weniger als 2 Gew.-% Halogen enthält, und
(b) wenigstens einer dipolarophilen Verbindung mit einer reaktiven Gruppe, die aus Olefinen und mit elektronenziehenden Gruppen substituierten Alkinen ausgewählt ist,
erhältlich ist.

2. Polymer gemäß Anspruch 1, worin das Polymer in (a) weniger als 1 Gew.-% Halogen enthält.

3. Polymer gemäß Anspruch 1, worin das Polymer in (a) weniger als 0,5 Gew.-% Halogen enthält.

4. Polymer gemäß den Ansprüchen 1 bis 3, worin die reaktive Gruppe in der dipolarophilen Verbindung ein Olefin ist.

5. Polymer gemäß den Ansprüchen 1 bis 3, worin die reaktive Gruppe in der dipolarophilen Verbindung ein Alkin ist.

6. Polymer gemäß den Ansprüchen 1 bis 5, worin wasssersolubilisierende Gruppen an die reaktiven Gruppen der dipolarophilen Verbindungen gebunden sind.

7. Beschichtung auf wäßriger Basis, die eine wäßrige Lösung des Polymers der Ansprüche 1 bis 6 umfaßt.

8. Gegenstand, der ein Substrat umfaßt, das mit dem Polymer der Ansprüche 1 bis 6 beschichtet ist.

9. Verfahren, umfassend die Beschichtung eines Substrats mit dem Polymer der Ansprüche 1 bis 6.

10. Gegenstand, der ein Substrat umfaßt, welches mit einem transparenten Film des Polymers der Ansprüche 1 bis 6 beschichtet ist.

## Revendications

1. Polymère comprenant des groupes triazole et/ou triazoline et au moins 15 pourcent en poids de groupes azide n'ayant pas réagi, que l'on peut obtenir à partir de la réaction entre:
(a) les groupes azide d'un polymère qui contient au moins 30 pourcent en poids de groupes azide et moins de 2 pourcent en poids d'halogène; et
(b) au moins un dipolarophile ayant un groupe réactif choisi parmi les oléfines et les alcynes qui sont substituées avec des groupes attracteurs d'électrons.

2. Polymère selon la revendication 1, dans lequel le polymère dans (a) contient moins de 1 pourcent en poids d'halogène.

3. Polymère selon la revendication 1, dans lequel le polymère dans (a) contient moins de 0,5 pourcent en poids d'halogène.

4. Polymère selon les revendications 1 à 3, dans lequel ledit groupe réactif dans ledit dipolarophile est une oléfine.

5. Polymère selon les revendications 1 à 3, dans lequel ledit groupe réactif dans ledit dipolarophile est une alcyne.

6. Polymère selon les revendications 1 à 5, dans lequel les groupes hydrosolubles sont fixés auxdits groupes réactifs desdits dipolarophiles.

7. Revêtement à base aqueuse comprenant une solution aqueuse du polymère selon les revendications 1 à 6.

8. Article comprenant un substrat revêtu du polymère selon les revendications 1 à 6.

9. Procédé consistant à revêtir un substrat avec le polymère selon les revendications 1 à 6.

10. Article comprenant un substrat revêtu d'un film transparent du polymère selon les revendications 1 à 6.
